# EUROPEAN PATENT APPLICATION

(11) **EP 2 228 414 A1**
(43) Date of publication of application: **15.09.2010**
(21) Application number: 09003653.4
(22) Date of filing: 13.03.2009
(51) Int. Cl.: C09D 7/12, C09D 175/16, C01B 31/02

(54) **UV-curable, wear resistant and antistatic coating filled with carbon nanotubes**

(71) Applicant: Bayer MaterialScience AG, 51368 Leverkusen (DE)
(72) Inventor: Meyer, Helmut, Dr., 51519 Odenthal (DE); Zhang, Zhong, 100190 Beijing (CN); Zhang, Hui, 650118 Kunming, Xishan District Yunnan Province (CN); Peng, Ke, 400084 Chongqiang (CN); Liu, Lu-Qi, 100191 Beijing (CN); Li, Hongchao, 201204 Shanghai (CN); Zhang, Hui, Dr., 100191 Beijing (CN); Bahnmüller, Stefan, Dr., 098641 Singapore (SG); Hitzbleck, Julia, Dr., 50668 Köln (DE)

(57) **Abstract**

A methodology is provided for making UV-curable, wear resistant and antistatic coating filled with carbon nanotubes (CNTs). The composition consists of a mixture of CNTs, an acrylate-based monomer, a urethane-acrylate oligomer and a photoinitiator. The present invention provides a coating of which the wear resistance and antistatic properties are dramatically improved in comparison with the polymer substrate. This coating is suitable for protecting a variety of polymer substrates from scratch and electrostatic accumulation.

## Description

A methodology is provided for making UV-curable, wear resistant and antistatic coating filled with carbon nanotubes (CNTs). The composition consists of a mixture of CNTs, an acrylate-based monomer, a urethane-acrylate oligomer and a photoinitiator. The present invention provides a coating of which the wear resistance and antistatic properties are dramatically improved in comparison with the polymer substrate. This coating is suitable for protecting a variety of polymer substrates from scratch and electrostatic accumulation.

The present invention relates to a methodology for making a wear resistant and antistatic coating filled with carbon nanotubes (CNTs). The coatings polymerized under UV radiation comprise carbon nanotubes, an acrylate-based monomer as diluent, a urethane-acrylate oligomer, a photoinitiator as well as other additives. At an optimum CNT concentration of about 0.7 wt. %, the electrical conductivity, scratch resistance and fretting resistance of the invented coating are dramatically improved in comparison to the coating without CNTs. This coating should have a great potential for protecting polymer substrates from scratch and electrostatic accumulation.

It is well known that thermoplastic polymer plates and films, in particular the transparent ones (such as PMMA, PC and PVC), have poor wear resistance and can be easily scratched by hard objects. After scratching and abrasion, the surface quality and transparency of the products made of such polymers decay significantly. This deficiency has badly limited their service lifetime and also hindered their applications.

On the other hand, most of polymeric substrates are electrically insulating so that they have a tendency to generate electrostatic charge on their surface during friction/contact with other objects. Such a charge accumulation occurred on polymer surface attract lots of dust and dirt floating in the air and thus reducing the surface properties of polymers, e.g. the optical transparency and gloss.

In the past decades, numerous efforts have been conducted to improve the wear and scratch resistance of the polymer substrates. In U.S. 5698270 a so-called 'hard coating' or 'organic/inorganic hybrid coating' is applied to the polymer substrate and offers them superior hardness and abrasion resistance, as compared to the uncoated polymer substrate. The hard coatings are usually based on acrylate resins or their derivatives like in US 5242719 which can be cured or crosslinked via radical free polymerization under ultraviolet/electron beam or at certain temperature.

CN1556162A describes hard coatings which comprise inorganic nanoparticles (e.g nano-silica, nano-alumina particles) and which are incorporated into the acrylate-based matrices by a sol-gel approach or mechanical blending. It is worth noting that in order to obtain the desired level of hardness and scratch resistance for satisfying the abrasion standards required in many applications, the loading of the inorganic nanoparticles is normally quite high. Typical values substantially range from 5%-30%, as disclosed in CN 1556162A and CN1112594A.

However, the higher loading of nanoparticles makes the coat composition very viscous and this may cause processing problems. Furthermore, the polymer matrices containing higher loading of nanoparticles become brittle and could be cracked when subjected to impact load. One approach to the brittleness and cracking problem disclosed in US 0286383 is to add flexible component to the coating composition, however, the hardness and scratch resistance decrease at the same time.

Moreover, in order to avoid electrostatic charging on the surfaces of insulating polymers, the electrical conductivity should be above 10⁻⁶Sm⁻¹. The conventional practice to achieve this conductivity is to use conductive fillers, such as metal powder, carbon black, conjugated polymer or others. In recent years, the CNTs have drawn attention of numerous researchers owing to their high electrical conductivity and high aspect ratio. The percolation threshold of nanotube-containing composite can be as low as 0.1wt.% which is by far much lower than using conventional conductive fillers.

Carbon nanotubes (NTs) are very strong, light-weight, electrically conductive materials, which have been receiving enormous attention recently especially with regard to their usage in polymer nanocomposites..

Carbon nanotubes, according to the prior art, are understood as being mainly cylindrical carbon tubes having a diameter of from 3 to 100 nm and a length that is a multiple of the diameter. These tubes consist of one or more layers of ordered carbon atoms and have a core that differs in terms of morphology. These carbon nanotubes are also referred to as "carbon fibrils" or "hollow carbon fibers", for example.

Carbon nanotubes have been known for a long time in the specialist literature. Although Iijima (publication: S. Iijima, Nature 354, 56-58, 1991) is generally considered to have discovered nanotubes, such materials, in particular fibrous graphite materials having a plurality of graphite layers, have been known since the 1970s or early 1980s. The deposition of very fine fibrous carbon from the catalytic decomposition of hydrocarbons was described for the first time by Tates and Baker (GB 1469930A1, 1977 and EP 56004 A2, 1982). However, the carbon filaments produced on the basis of short-chained hydrocarbons are not described in greater detail in respect of their diameter.

Conventional structures of such tubes are those of the cylinder type. In the case of cylindrical structures, a distinction is made between single-wall monocarbon nanotubes and multi-wall cylindrical carbon nanotubes. Conventional processes for their production are, for example, arc discharge, laser ablation, chemical vapor deposition (CVD process) and catalytic chemical vapor deposition (CCVD process).

Such cylindrical carbon nanotubes can also be prepared by an arc discharge process. Iijima, Nature 354, 1991, 56-58 reports on the formation, by the arc discharge process, of carbon tubes consisting of two or more graphene layers which are rolled up to form a seamless closed cylinder and are nested inside one another. Chiral and achiral arrangements of the carbon atoms along the longitudinal axis of the carbon fibers are possible depending on the rolling vector.

Similar structures of carbon tubes, in which a cohesive graphene layer (so-called scroll type) or a broken graphene layer (so-called onion type) is the basis for the structure of the nanotube, were first reported by Bacon et al., J. Appl. Phys. 34, 1960, 283-90. This structure usually is designated as scroll type. Similar structures were later also found by Zhou et al., Science, 263, 1994, 1744-1747 and by Lavin et al., Carbon 40, 2002, 1123-1130.

With large-scale production processes being developed, especially for multi-walled nanotubes (MWNTs), application of these compounds becomes more and more attractive. To obtain the lowest amount of additives possible, single-walled nanotubes (SWNTs) may be preferable, but these are not yet available in large scale.

In the present invention, a methodology of making a wear resistant and antistatic coating filled with CNTs is disclosed. It was found that both wear resistance (including scratch and fretting resistance) and the surface electrical conductivity were simultaneously improved by addition of CNTs. Moreover, the coating does not loose its ductility in the presence of nanotubes. Since the equipment used for the invented coating satisfies the industrial standards, the coatings of this invention can be easily scaled-up and thus, are very promising for various potential applications.

In the present invention ozonized multi-wall carbon nanotubes (MWCNTs) are used as the reinforcing fillers to improve mechanical, tribological, and electrical properties of the coatings. Preferably, ozonolysis in the presence of water vapour is applied to efficiently functionalize the MWCNTs. Compared with the traditional oxidation process using strong liquid oxidizer, ozonolysis is much more convenient for processing, environmental friendly as well as less expensive.

The MWCNTs with surface modification are mechanically blended with the other components under optimized conditions, while applying high shear to the mixture. By this method, a satisfied homogeneous dispersion of MWCNTs is achieved, especially for the ozonized MWCNTs of the present invention.

### SUMMARY OF THE INVENTION

The present invention provides a methodology for making a wear resistant and antistatic coating filled with CNTs. The coating composition comprises CNTs, an acrylate-based monomer as diluent and reactive component, a urethane-acrylate oligomer, a photoinitiator and other additives. Hardening of the coating is carried out by polymerization or crosslinking under ultraviolet (UV) radiation.

The CNTs used in the present invention include single-walled carbon nanotubes (SWCNTs) and multi-walled carbon nanotubes (MWCNTs). The purity of CNTs is more than 95wt.%. The MWCNTs have diameters lower than 100nm. The length of MWCNTs is from 1 to 100 µm.

The coating compositions in the present invention comprise acrylate-based monomers having C=C double bond, which can be opened by free radical and polymerized/crosslinked under UV radiation or at elevated temperatures.

The coating compositions in the present invention comprise multifunctional urethane-acrylate oligomers, which are copolymerized with acrylate-based monomers under UV radiation or at elevated temperature. Changing the ratio of monomer to oligomer in the coating compositions, can, to some extent, regulate the micro-structure and final properties of the invented coatings, such as film-forming quality, crosslink density of coating, wear resistance, adhesion between coating and substrate.

The coating compositions in the present invention may also optionally comprise various flattening agents, surface active agents and thixotropic agents for viscosity control. These additives are well known in the art.

The present invention provides a method of homogeneous dispersion of the CNTs in polymer matrices. According to an embodiment of the present invention, the UV-curable coating compositions are prepared by blending together the CNTs, the acrylate-based monomer, the urethane-acrylate oligomer, the photoinitiator and optionally additives. The blending methods include high speed mixing, three-roll milling, ultrasonic vibration or the combination of these methods. After processing, the CNTs are homogeneously dispersed in the component of the matrix material and the dispersion is stable for a long time.

In operation, the blend of CNTs, acrylate-based monomer, urethane-acrylate oligomer and other additives can be applied onto polymer substrate by spin-coating, blade-coating, roll-coating, brush, spray-coating and the like. Hazardous solvents are not necessary for these processes. The methods used in the present invention are common practice in engineering and therefore can be easily scaled-up.

The carbon nanotub containing wet film can be rapidly UV-cured at ambient temperature without additional heating. The curing time lasts for several seconds to several minutes, depending mainly on the intensity of ultraviolet light. The dry coated film is preferably applied at a thickness of about 10 -40 µm.

The cured coatings exhibit superior hardness, scratch/abrasion resistance as well as chemical resistance as compared to the uncoated polymer substrates. The electrical conductivity of the coatings is dramatically increased with increase in nanotube loading. The conducting network is formed at a carbon nanotube loading of above 0.7wt.%.

### BRIEF DESCRIPTION OF DRAWINGS

FIG. 1 Pencil hardness of the invented coatings as a function of the carbon nanotube content.
FIG. 2 Schematic illustration of the configuration of long-term fretting test.
FIG. 3 3D worn surfaces of the coatings after fretting tests: (a) without CNTs, and (b) with 0.7wt.% CNTs.
FIG. 4 Surface resistivity of the invented coatings as a function of the carbon nanotube content.
FIG. 5 Optical transmittance of the invented coatings filled with different contents of CNTs.

### DETAILED DESCRIPTIONS OF THE INVENTION

The CNTs used in the present invention are either single-walled carbon nanotubes (SWCNTs) or multi-walled carbon nanotubes (MWCNTs). A SWCNT is a single-layer carbon nanotube, which has a diameter of about 0.7nm to about 2.5nm and a length of up to 1mm or even above. A MWCNT comprises a plurality of nanotubes with increasing diameter.

Carbon nanotubes according to this invention comprise all single-walled or multi-walled carbon nanotube structures based on cylinder type, scroll type, or onion type structure. Preferred are multi-walled carbon nanotubes of cylinder type or scroll type or mixtures thereof.

Preferably, carbon nanotubes with a length to diameter ration of higher than 5, most preferably of higher than 100 are used.

Most preferably, carbon nanotubes in the form of agglomerates are used, wherein the agglomerates have an average diameter in the range of 0,05 to 5 mm, preferably 0,1 to 2 mm, an most preferably 0,2 to 1 mm.

The mean diameter of the carbon nanotubes is from 3 to 100 nm, preferably from 5 to 80 nm, particularly preferably from 6 to 60 nm.

In contrast to the previous CNTs described in the literature, with structures of the scroll type having only one continuous or broken graphene layer, in the novel structural forms of carbon a plurality of graphene layers are combined to form a pile, which is in rolled-up form (multi-scroll type). Such carbon nanotubes and carbon nanotube agglomerates are, for example, subject of the yet unpublished German patent application with official application no. 102007044031.8 whose content regarding the CNT and their production herewith will be included in the matter of disclosure in this application. This CNT structure behaves to the known carbon nanotubes of the simple scroll type in terms of structure like the multi-wall cylindrical monocarbon nanotubes (cylindrical MWNT) to the single-wall cylindrical carbon nanotubes (cylindrical SWNT).

Unlike in the onion-type structures still described occasionally in the prior art, the individual graphene or graphite layers in the novel carbon nanotubes evidently run, when viewed in cross-section, continuously from the centre of the CNTs to the outside edge, without interruption. This can permit, for example, improved and more rapid intercalation of other materials into the tube structure, because more open edges are available as entry zones of the intercalates, as compared with CNTs having a simple scroll structure (Carbon 34, 1996, 1301-1303) or CNTs having an onion-type scroll structure (Science 263, 1994, 1744-1747).

The methods known today for the production of carbon nanotubes include arc discharge, laser ablation and catalytic processes. In many of these processes, carbon black, amorphous carbon and fibers having large diameters are formed as by-products. In the case of the catalytic processes, a distinction can be made between deposition on supported catalyst particles and deposition on metal centers formed in situ and having diameters in the nanometer range (so-called flow processes). In the case of production by the catalytic deposition of carbon from hydrocarbons that are gaseous under reaction conditions (CCVD; catalytic carbon vapor deposition hereinbelow), acetylene, methane, ethane, ethylene, butane, butene, butadiene, benzene and further carbon-containing starting materials are mentioned as possible carbon donors. Preferably, CNTs obtainable from catalytic processes are used.

The catalysts generally contain metals, metal oxides or decomposable or reducible metal components. For example, Fe, Mo, Ni, V, Mn, Sn, Co, Cu and others are mentioned as metals in the prior art. Although most of the individual metals have a tendency to form nanotubes, high yields and low amorphous carbon contents are advantageously achieved according to the prior art with metal catalysts that contain a combination of the above-mentioned metals. Preferably, CNTs obtainable by use of mixed catalysts are employed..

Particularly advantageous systems for the synthesis of CNTs are based on combinations of metals or metal compounds which contain two or more elements from the series Fe, Co, Mn, Mo, and Ni.

The formation of carbon nanotubes and the properties of the tubes that are formed are dependent in a complex manner on the metal component, or combination of a plurality of metal components, used as catalyst, the support material used and the interaction between the catalyst and the support, the starting material gas and partial pressure, the admixture of hydrogen or further gases, the reaction temperature and the residence time or the reactor used

A preferred embodyment of the invention is the use of carbon nanotubes prepared by a process according to WO 2006/050903 A2.

In all different processes described above using different catalysts, carbon nanotubes of different structure are being produced, which are obtained from the process usually in the form of carbon nanotube agglomerates.

For the invention preferably suitable carbon nanotubes can be obtained by processes which are being described in following literature:
The production of carbon nanotubes having diameters of less than 100 nm was described for the first time in EP 205 556 B1. In this case, the production is carried out using light (i.e. short- and medium-chained aliphatic or mono- or bi-nuclear aromatic) hydrocarbons and an iron-based catalyst, on which carbon carrier compounds are decomposed at a temperature above 800 to 900□C.

WO 86/03455A1 describes the production of carbon filaments which have a cylindrical structure with a constant diameter of from 3.5 to 70 nm, an aspect ratio (ratio of length to diameter) of greater than 100 and a core region. These fibrils consist of a large number of interconnected layers of ordered carbon atoms, which are arranged concentrically around the cylindrical axis of the fibrils. These cylinder-like nanotubes were produced by a CVD process from carbon-containing compounds by means of a metal-containing particle at a temperature of from 850□C to 1200□C.

A process for the production of a catalyst which is suitable for the production of conventional carbon nanotubes having a cylindrical structure has also become known from WO2007/093337A2. When this catalyst is used in a fixed bed, relatively high yields of cylindrical carbon nanotubes having a diameter in the range from 5 to 30 nm are obtained.

A completely different way of producing cylindrical carbon nanotubes has been described by Oberlin, Endo and Koyam (Carbon 14, 1976, 133). Aromatic hydrocarbons, for example benzene, are thereby reacted on a metal catalyst. The resulting carbon tube exhibits a well-defined, graphitic hollow core which has approximately the diameter of the catalyst particle, on which there is further, less graphitically ordered carbon. The authors suppose that the graphitic core is formed first by rapid catalytic growth, and then further carbon is deposited pyrolitically. The entire tube can be graphitized by treatment at high temperature (2500□C-3000□C).

Most of the above-mentioned processes (arc discharge, spray pyrolysis or CVD) are used today for the production of carbon nanotubes. The production of single-wall cylindrical carbon nanotubes is very expensive in terms of apparatus, however, and proceeds according to the known processes with a very low formation rate and often also with many secondary reactions, which result in a high proportion of undesirable impurities, that is to say the yield of such processes is comparatively low. For this reason, the production of such carbon nanotubes is still extremely expensive even today, and they are used in small amounts only for highly specialized applications. However, its use can also be considered fo this invention, but it is less preferably than the use of multi-walled carbon nanotubes of the cylinder or scroll type.

Today, the production of multi-walled carbon nanotubes in form of nested seamless cyclindrical tubes or in the form of scroll or onion type structure is being carried out commercially in large quantities by using catalytic processes. These processes usually result in higher productivity than the arc discharge process or other known processes and are being typically done in the kg range, i.e. for the production of several kg per day. Carbon nnotubes obtained from such processes are usually more cost efficient than singe-walled carbon nanotubes and thus, are being used as an additive for enhancement of product properties in various materials.

Subject matter of the invention is a coating composition comprising A) a urethane-acrylate oligomer, B) carbon nanotubes, C) at least one acrylate-based monomer (as diluent and reactive component) and D) a photoinitiator.

A preferred composition is **characterized in that** at least a part of the carbon nanotubes B) have functional groups containing oxygen, optionally have oxygen containing functional groups which are obtained by oxidation of carbon nanotubes.

Another preferred composition is **characterized in that** the carbon nanotubes with oxygen containing functional groups are obtained by oxidation with an ozone comprising gas.

In the present invention, the CNTs are preferably used that are surface-modified by ozone treatment in the presence of water vapour in order to improve the dispersibility of the CNTs and to increase the compatibility of the CNTs to the matrix material. CNTs are ozonized to yield chemical moieties attached to their surface, end-caps and side-walls. The ozone-modified CNTs contain oxygen-containing groups attached to their end-caps and side-walls, i.e. carboxylic groups, carbonyl groups, hydroxyl groups etc.

In a particular preferred form of the inventive composition the carbon nanotubes have been oxidized by simultaneous treatment with oxygen/ozone in the gas phase comprising the steps
a) placing carbon nanotubes into a reaction zone
b) passing a mixture of ozone, oxygen and water through the carbon nanotubes.

A further particularly preferred composition is **characterized in that** the carbon nanotubes have been oxidized applying a mixture of ozone, oxygen and water which is passed continuously through carbon nanotubes agglomerates.

Another particularly preferred composition is **characterized in that** during the oxidation process of the carbon nanotubes the temperature in the reaction zone is kept at last 200 °C, preferably at last 120 °C, more preferably from 0 to 100 °C, most preferably 10 to 60 °C.

Preferably, during the oxidation process of the carbon nanotubes the reaction time of ozonolysis of carbon nanotubes is up to 120 minutes, preferably up to 60 minutes, most preferably up to 30 minutes.

During the oxidation process of the carbon nanotubes particularly preferred the exposure of carbon nanotubes is carried out with an ozone/oxygen mixture including a percentage of ozone from 1 vol.% to about 11 vol.-%.

Another particularly preferred composition is **characterized in that** during the oxidation process of the carbon nanotubes the flow rate of the mixture of ozone, oxygen and water is from about 100 l/hour to about 1000 l/hour, preferably from about 100 l/hour to about 200 l/hour per 1 g of carbon nanotubes.

During the oxidation process of the carbon nanotubes in a preferred variant the relative humidity of water vapour in the reaction zone is up to 100 %, preferably at least 10 % up to 100 %, particularly preferred 10 % to 90 %.

A particular preferred composition is **characterized in that** the amount of carbon nanotubes B) is from 0. 1 to 5 % by weight, preferably from 0.2 to 3 % by weight, particularly preferred from 0.2 to 2 % by weight of the composition.

The acrylate-based monomers C) used in the present invention are preferably dipropylene glycol diacrylate (DPGDA), tripropylene glycol diacrylate (TPGDA), triethylene glycol diacrylate (TEGDA), 1,6 hexanediol diacrylate (HDDA),, pentaerythrite triacrylate (PETA), trimethylolpropane triacrylate (TMPTA), ethoxylated trimethylol propane triacrylate (TMPEOTA), propoxylated glycerol triacrylate (GPTA), ethoxylated glycerol triacrylate, dipentaerythritol hexaacrylate (DPHA) and other polyfunctional acrylate monomers. The preferred monomers are TMPTA and HDDA.

The amount of acrylate-based monomers C) varies from about 1wt.% to about 80wt.%, and preferably from about 20wt.% to about 50wt.%, relative to the total weight of the invented coating composition. Preferably, the coating compositions contain at least one of these monomers.

The oligomers A) used in the present invention are urethane-acrylate oligomer, which serves as the main film-forming component and dominates the major performance of coating, such as curing speed, flexibility, abrasion resistance, solvent resistance and the like. Such urethane acrylates of the present invention preferably are aliphatic urethane acrylate oligomers particularly with a molar mass in the range from 300 g/mol up to 8000 g/mol, preferably from 400 g/mol up to 6000 g/mol, and combinations thereof. Particular preferably the aliphatic urethane acrylate oligomers A) used are those oligomers in the products of CYTEC Industries Inc., for example, Ebecryl® 284, Ebecryl® 1290, Ebecryl® 4820, Ebecryl® 5129, and Ebecryl® 8406 (Ebecryl is a trademark of CYTEC Industries Inc.).

Generally, the amount of oligomers A) is from about 1wt.% to about 80wt.%, and preferably from about 20wt.% to about 50wt.%, relative to the total weight of the invented coating composition. It is worth noting that other type of oligomers, such as epoxy acrylate, polyether acrylate, polyester acrylate or combination thereof, may be also suitable for the coating composition of the present invention.

The UV-curable coating compositions in the present invention comprise an amount of photoinitiator D) which is able to sufficiently initiate the free radical polymerization of acrylate monomer C) and urethane-acrylate oligomer A) under reduced pressure, nitrogen atmosphere or even in air. If relatively low ultraviolet intensity is to be used, it is advisable to cure the coating compositions under nitrogen atmosphere or reduced pressure in order to avoid a certain inhibition due to oxygen.

Generally, the amount of photoinitiator D) is from about 0.05 wt.% to about 10 wt.%, and preferably from about 0.1 wt.% to about 5 wt.%, with respect to the total weight of the invented coating composition. Note that the use of greater amount of photoinitiator produces the coating having shorter cure time.

A variety of suitable UV photoinitiators may be employed in the present invention based on benzophenone and substituted benzophenone, such as 1-hydroxycyclohexyl-phenyl-ketone (IRGACURE 184), 2-hydroxy-2-methylpropiophenone (DAROCUR 1173), 2-hydroxy-1-[4-(2-hydroxyethoxy) phenyl]-2-methyl-1-propanone (IRGACURE 2959), IRGACURE 500 (mixture by weight of 50% IRGACURE 184 and 50% Benzophenone), IRGACURE 1000. Other suitable UV photoinitiators include, but are not limited to: acetophenone and substituted acetonphenones; benzoin and its alkyl esters; xanthone and substituted xanthones; diethoxy-acetophenone; aminoketones, such as IRGACURE 907, IRGACURE 369, and IRGACURE 1300; benzildimethylketals, such as alpha-dimethoxy-alpha-phenylacetophenone (IRGACURE-651), bis-acyl-phosphine oxide (BAPO) and blends thereof, such as IRGACURE 819, DAROCUR 4265 (mixture by weight of 50% DAROCUR TPO and 50% DAROCUR 1173), IRGACURE 1700, IRGACURE 1800, and IRGACURE 1850 and mixtures thereof (all commercially available from Ciba Specialty Chemicals, Inc.).

The coating compositions produced in the present invention may be furthermore mixed with other substances and additives. These include different fillers, smoothing agents, degassing agents such as polyacrylates, coupling agents such as aminoalkyltrialkoxysilanes and flattening agents such as polysiloxanes which are used in amounts normally employed in acrylate-based coating technology. In order to improve the resistance to weathering influence such as sunlight, UV absorbers may also be added in the usual amounts to the coating composition. It is also possible to use solvents that are inert within the context of free-radical polymerization, which are then removed before the curing process of this UV-curing system, if necessary by application of heat and degassing.

The UV-curable CNT-based coatings according to the present invention are suitable for various substrates such as for example glass, plastics materials, in particular the transparent ones such as polycarbonate (PC), polyvinyl chloride sheeting (PVC) and poly methyl methacrylate (PMMA), metal e.g. aluminum or steel sheeting which may optionally have been subjected to a preliminary treatment, mineral materials such as, for example cement, ceramics. Substrates consisting of several of the aforementioned materials may also be coated. The coating compositions according to this invention are preferably suitable for the wear resistant and antistatic coating on plastic materials, in particular PMMA, PC, PVC, and other plastics.

Subject matter of the invention is also a substrate coated with a cured or an uncured composition according to the invention. A further subject matter of the invention is a coating or film obtained from a cured composition according to the invention.

Another subject matter of the invention is the use of the inventive curable composition for the manufacturing of coatings for vehicles and building construction parts.

The coating composition is applied to the substrate materials by conventional methods known in lacquer technology such as blade-coating, roll-coating, centrifugal spin-coating, pouring, dip-coating, and vacuum spray-coating. The liquid UV-curable resin is usually cured by irradiation with ultraviolet radiation or electron beams. The curing process is carried out under a UV lamp (e.g. LED radiator, mercury medium-pressure radiator and mercury high pressure radiator) in a known manner.

The present invention also relates to a method to disperse CNTs homogenously. The dispersion methods include high speed mixing, three-roll milling, ultrasonic vibration or the combination of these methods. In the first step of compounding, the acrylate-based monomer and higher-loading CNTs were mixed together by utilizing a high-speed Dissolver (DISPERMAT), which provided high shear force and broke up the large-size agglomerates of CNTs. In general, the rotation speed varied from 1000rpm to 5900rpm, preferably from 3000rpm to 5000rpm, and the rotation time was controlled in 0.5h to 2h.

In addition, the above mixture can be further processed by a three-roll mill (EXAKT 80E) with gradually decreasing the gap between rolls. The smallest gap value was less than or equal to 5µm and the rotation speed of the first roll varied from 30rpm to 300rpm, preferably from 60rpm to 180rpm. The dispersion obtained via these procedures was brightly black and contained about 3wt.% of CNTs. In the following sections it was termed masterbatch.

In the following step of compounding, the masterbatch was thinned down by an appropriate amount of acrylate-based monomer, urethane-acrylate oligomer as well as photoinitiator so as to prepare coating containing different loadings of CNTs. A small amount of additives (assistants), such as flattening agents, surface agents and thixotropic agents etc, may be added to the masterbatch. This dispersion was intensively stirred at room temperature.

In the final step, a proper amount of this dispersion was applied onto polymer substrates, such as PC, PMMA or PVC plates (∼1mm in thickness) optionally using one of the following methods, such as spin-coating, spray-coating, blade-coating, roll-coating or brush. The wet films were subsequently UV-cured at room temperature in the period of 10s to 10min using a hot embossing system HEX01 equipped with UV unit (JENOPTIK Mikrotechnik GmbH), which gave the UV light intensity of 1.5mW/cm² at a wavelength of 365nm. In general, the dry coating films have the thickness of about 1 to 100 µm, preferably from 10 to 40 µm.

### EXAMPLES

The following specific examples are provided to allow a better understanding of the present invention to those skilled in the art. It is to be understood that these samples are intended to be illustrative only and are not intended to limit the invention in any way.

### Example 1

In the first step of compounding, 194g trimethylolpropane triacrylate (TMPTA) and 6g multi-walled carbon nanotubes (German patent application no. 102007044031.8) were mixed together by utilizing a high-speed Dissolver (DISPERMAT). The rotation speed was set to be 3000rpm, and the rotation time was controlled to 2h.

After that, the above mixture was further processed by a three-roll mill (EXAKT 80E) with gradually decreasing the gap between rolls. Under gap mode, the smallest gap value was equal to 5µm, while under force mode, it was less than 1µm. The rotation speed of the first roll was set to be 180rpm. The dispersion obtained via these procedures was brightly black and contained about 3wt.% ofCNTs. And it was termed masterbatch in the following.

In the second step, the masterbatch was thinned down by an appropriate amount of urethane-acrylate oligomer (Ebecryl® 1290), trimethylolpropane triacrylate (TMPTA) as well as photoinitiator 1-hydroxycyclohexyl-phenyl-ketone (IRGACURE 184) so as to prepare coating containing different loadings of CNTs. In the final coating formulations, the weight ratio of UA to TMPTA maintained constant (UA/TMPTA=1/2). The CNT loadings varied from 0.1 wt.% to 1.3wt.%.

3wt% of UV photoinitiator of IRGACURE 184 was chosen to introduce to the compositions of UA and TMPTA. Table 1 depicts the formula of the coating compositions. Meanwhile, a small amount of additives (assistants), such as flattening agents, surface agents and thixotropic agents, may be added to the masterbatch. And this dispersion was intensively stirred at room temperature.

**TABLE 1**

| **Coating sample** | | **MWCNT Content** **[g]** | **3.0 wt.% Masterbatch** **[g]** | **UA** **[g]** | **TMPT A** **[g]** | **IRGCURE 184** **[g]** |
|---|---|---|---|---|---|---|
| Neat coating | | 0 | 0 | 3 | 6.00 | 0.27 |
| With MWCNTs | 0.1wt.% | 0.009 | 0.30 | 3 | 5.71 | 0.27 |
| With MWCNTs | 0.3wt.% | 0.027 | 0.90 | 3 | 5.12 | 0.27 |
| With MWCNTs | 0.5wt.% | 0.045 | 1.51 | 3 | 4.54 | 0.27 |
| With MWCNTs | 0.7wt.% | 0.063 | 2.11 | 3 | 3.95 | 0.27 |
| With MWCNTs | 1.0wt.% | 0.091 | 3.03 | | 3.06 | 0.27 |
| With MWCNTs | 1.3wt.% | 0.119 | 3.95 | 3 | 2.17 | 0.27 |

| | | | | | | |
|---|---|---|---|---|---|---|
| NOTE: MWCNTs - German patent application no. 102007044031.8 UA - Ebecryl® 1290, Cytec Industries Inc. TMPTA - Cytec Industries Inc. IRGCURE 184 - Ciba Specialty Chemicals, Inc. | | | | | | |

In the final step, a proper amount of this dispersion was applied onto polycarbonate (PC) substrates (∼1mm in thickness), using blade-coating method. The wet coatings were subsequently UV-cured at room temperature in the period of 10min using a hot embossing system HEX01 equipped with UV unit (JENOPTIK Mikrotechnik GmbH) which gave the UV light intensity of 1.5mW/cm² at a wavelength of 365nm.

The thickness of resultant solid coatings with different loadings of CNTs depended mainly on the processing conditions and dispersion viscosity. It was accurately measured using a surface profilometer (Dektak 150, Veeco, USA). The coating thickness as applied to the PC plate is listed in Table 2 for each of the compositions.

**TABLE 2**

| Coating sample | Coating Thickness [µm] |
|---|---|
| neat coating | 35.2 |
| 0.1wt.% MWCNTs | 33.5 |
| 0.3wt.% MWCNTs | 34.9 |
| 0.5wt.% MWCNTs | 31.2 |
| 0.7wt.% MWCNTs | 36.0 |
| 1.0wt.% MWCNTs | 32.4 |
| 1.3wt.% MWCNTs | 35.1 |

Pencil hardness test is a typical industrial approach to evaluate the short-term scratch resistance of the studied coatings. In the present invention, the scratch resistance of the coatings was characterized by a commercial pencil hardness tester (Tianjin Testing Equipment, China) according to the standard GB/T 6739-1996. A vertical force of 10N was applied at 45° angle to the horizontal film surface as the pencil was moved over the coated specimen.

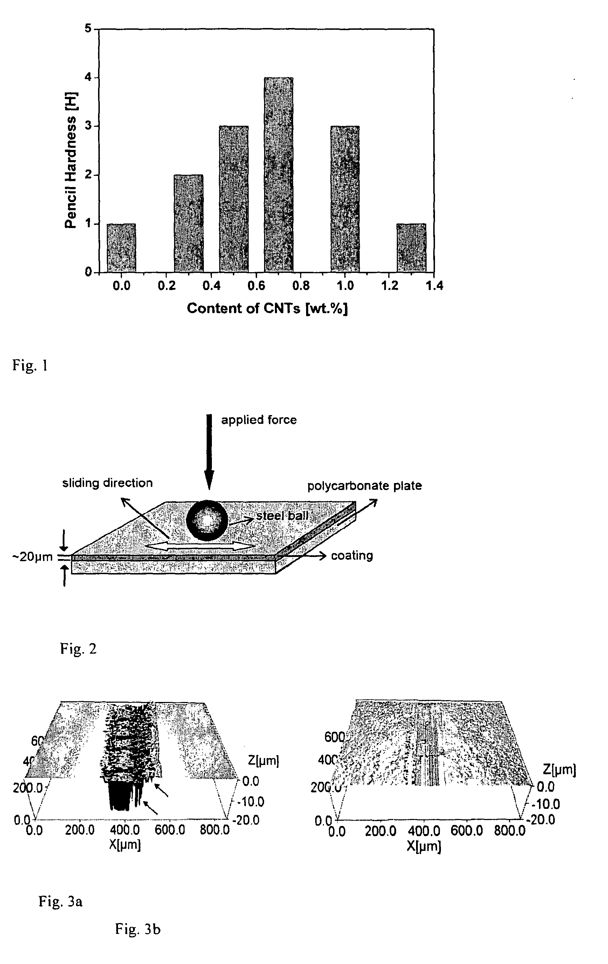

Despite the excellent physical and optical properties of the PC, the poor scratch resistance is a disadvantage regarding their application. It is found from the pencil hardness test results that the pencil grade of PC plate without protective coating is 6B. As seen in the Fig. 1, only about 0.7wt.% CNTs can increase the pencil hardness by three grades, i.e. from 1H to 4H, as compared to the coating containing no CNTs. However, the pencil hardness decreases with further increasing CNTs. This is because higher content of CNTs hinder the ultraviolet from penetrating into the coating, and therefore the degree of polymerization of the coating (i.e. crosslink density) reduces.

After the pencil hardness test with a 3H grade pencil, optical micrographs were taken in order to interpret the property improvement. The unfilled coating fractured and formed fishbone-like cracks along the scratched track, however, in the case of coating filled with CNTs, no obvious surface cracks were found. And the scratched tracks tended to be unclear with increasing carbon nanotube content.

### Example 2

The CNT-containing coatings were produced in the same manner as in Example 1, except that, the fretting behavior of the invented coatings was evaluated under reciprocating sliding using a universal micro-tribotester (UMT-2, Center for Tribology Inc., USA), the configuration of which is schematically shown in Fig.2. A steel ball (GCr15, initial surface roughness Ra, Rq≤10nm) with a diameter of 4mm served as the counterpart. The fretting wear lasted for 60min, under a constant applied load of 0.4N and a sliding speed of 30rev/min, after that a scratch length of 8mm. Data of normal and tangential forces as well as coefficient of friction (COF) were simultaneously measured during the fretting process.

After the fretting tests, the worn surfaces were studied under a white light interferometer (MicroXAM, ADE Phase Shift Inc., USA). Fig.3 (a) and (b) give the comparison of three dimensional worn surfaces between unfilled and CNT-filled coating samples. The difference of the worn surfaces is significant.

Numerous cracks were formed along the direction of coating thickness, which is typical of surface fatigue of material, as indicated by arrows in Fig.3(a). Therefore, the worn surface of the neat coating sample looks very coarse. On the contrary, for the coating filled with 0.7wt.% CNTs, the crack disappeared and crack amount was dramatically reduced (cf. Fig.3(b)), and only some inconspicuous grooves are visible. This indicates that addition of CNTs can inhibit the crack formation and propagation on fretting process.

Table 3 presents the quantitative results of fretting tests of the invented coatings. Since the mass loss of coating samples on fretting process was too small to measure accurately, the wear volume measured directly by a white light interferometer was used to characterize the wear rate of the samples. The wear resistance of coating filled with 0.7wt.% CNTs is clearly seen from Table 3. More than 60-fold decrease in wear volume was achieved after addition of 0.7wt.% CNTs. Moreover, the average coefficient of friction (COF ) values, which were estimated from the stable stages in the tribological curves, were significantly decreased from 0.79 of the neat coating to 0.59 of 0.7wt.% carbon nanotube-filled coating, namely, ∼25% decrease in COF was achieved.

**TABLE 3**

| **Coating sample** | **Wear volume** **[x10⁴µm³]** | **Wear depth** **[**µ**m]** | **Wear width** **[µm]** | **Coefficient of friction** |
|---|---|---|---|---|
| neat coating | 204 | 20.0 | 288 | 0.79 |
| with 0.7wt.% CNTs | 3.2 | 0.31 | 168 | 0.59 |

### Example 3

The CNT-containing coatings were produced in the same manner as in Example 1, except that, the surface resistivity of the coatings containing different contents of CNTs was determined using a four-point contact direct-current conductivity measurement (4200-SCS, Keithley Instruments Inc., USA), in accordance with ASTM D257. Most of the measurements were obtained by the four-point method, in order to eliminate contact-resistance effects. The specimens were cut into 5mm×5mm×40µm pieces, copper leads were attached to the electrodes with a spacing of approximately 1mm.

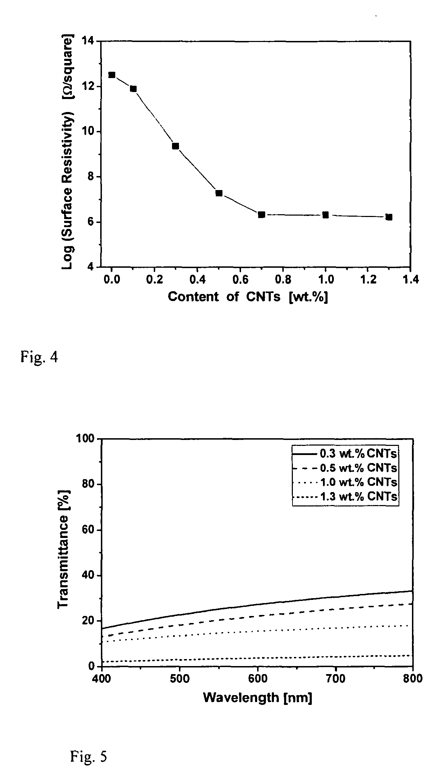

Fig.4 shows that the surface electrical resistivity decreases with increasing the CNT content. At lower CNT content, the surface resistivity drops very fast (6 orders of magnitude) and then the curve tends to be even at higher CNT content. This tendency is in substantial agreement with other reports on electrical conductivity of carbon nanotube-filled polymer systems. In the present invention, the percolation threshold of CNT-containing composites is about 0.7wt.%, i.e. a conducting network of nanotubes is formed at this content.

### Example 4

The CNT-containing coatings were produced in the same manner as in Example 1, except that, the transmittance of the invented coatings in the range of visible wavelength was evaluated by a UV-vis-NIR scanning spectrophotometer with a scanning speed of 266.75nm/min (Lambda950, Perkin-Elmer Inc., USA) using air as reference. Fig.5 shows that the transmittance is decreased with increasing the content of CNTs. However, at lower content of CNTs, it is found that the coatings are still translucent and may be suitable for use in the filed where the transparency is not critical requirement. Reducing the coating thickness may be another way to further increase the transparency but maintain other useful properties, like wear resistance and electrical conductivity.

### Example 5

The CNT-containing coatings were produced in the same manner as given in Example 1. The freestanding coating can be flexed without cracking even at higher nanotube content (1.3wt.%).

## Claims

1. Coating composition comprising A) a urethane-acrylate oligomer, B) carbon nanotubes, C) at least one acrylate-based monomer (as diluent and reactive component) and D) a photoinitiator.

2. Composition according to claim 1, **characterized in that** at least a part of the carbon nanotubes B) have functional groups containing oxygen, optionally have oxygen containing functional groups which are obtained by oxidation of carbon nanotubes.

3. Composition according to claim 2, **characterized in that** the carbon nanotubes with oxygen containing functional groups are obtained by oxidation with an ozone comprising gas.

4. Composition according to any of claims 2 or 3, **characterized in that** the carbon nanotubes have been oxidized by simultaneous treatment with oxygen/ozone in the gas phase comprising the steps
a) placing carbon nanotubes into a reaction zone
b) passing a mixture of ozone, oxygen and water through the carbon nanotubes.

5. Composition according to any of claims 2 to 4, **characterized in that** the carbon nanotubes have been oxidized applying a mixture of ozone, oxygen and water which is passed continuously through carbon nanotubes agglomerates.

6. Composition according to claim 4 or 5, **characterized in that** during the oxidation process of the carbon nanotubes the temperature in the reaction zone is kept at last 200 °C, preferably at last 120 °C, more preferably from 0 to 100 °C, most preferably 10 to 60 °C.

7. Composition according to any of claims 4 to 6, **characterized in that** during the oxidation process of the carbon nanotubes the reaction time of ozonolysis of carbon nanotubes is up to 120 minutes, preferably up to 60 minutes, most preferably up to 30 minutes.

8. Composition according to any of claims 4 to 7, **characterized in that** during the oxidation process of the carbon nanotubes the exposure of carbon nanotubes is carried out with an ozone/oxygen mixture including a percentage of ozone from 1 vol.-% to about 11 vol.%.

9. Composition according to any of claims 4 to 8, **characterized in that** during the oxidation process of the carbon nanotubes the flow rate of the mixture of ozone, oxygen and water is from about 100 1/hour to about 1000 1/hour, preferably from about 100 1/hour to about 200 1/hour per 1 g of carbon nanotubes.

10. Composition according to any of claims 4 to 9, **characterized in that** during the oxidation process of the carbon nanotubes the relative humidity of water vapour in the reaction zone is up to 100 %, preferably at least 10 % up to 100 %, particularly preferred 10 % to 90 %.

11. Composition according to any of claims 1 to 10, **characterized in that** the amount of carbon nanotubes B) is from 0. 1 to 5 % by weight, preferably from 0.2 to 3 % by weight, particularly preferred from 0.2 to 2 % by weight of the composition.

12. Composition according to any of claims 1 to 11, **characterized in that** the urethane-acrylate oligomer A) is an aliphatic urethane acrylate oligomer particularly with a molar mass in the range from 300 g/mol up to 8000 g/mol, preferably from 400 g/mol up to 6000 g/mol

13. Composition according to any of claims 1 to 12, **characterized in that** the amount of the urethane-acrylate oligomer A) in the composition is from 1 % by weight to 80 % by weight, and preferably from 20 % by weight to 50 % by weight, relative to the total weight of the total coating composition.

14. Composition according to any of claims 1 to 13, **characterized in that** the acrylate-based monomers C) are selected from the group consisting of dipropylene glycol diacrylate (DPGDA), tripropylene glycol diacrylate (TPGDA), triethylene glycol diacrylate (TEGDA), 1,6-hexanediol diacrylate (HDDA), pentaerythrite triacrylate (PETA), trimethylolpropane triacrylate (TMPTA), ethoxylated trimethylol propane triacrylate (TMPEOTA), propoxylated glycerol triacrylate (GPTA), ethoxylated glycerol triacrylate, dipentaerythritol hexaacrylate (DPHA) and combinations thereof, preferably TMPTA and HDDA.

15. Composition according to any of claims 1 to 14, **characterized in that** the amount of the photoinitiator D) in the composition is from 0.05 % by weight to 10% by weight, and preferably from 0.1 % by weight to 5 % by weight, relative to the total weight of the total coating composition.

16. Composition according to any of claims I to 15, **characterized in that** the photoinitiator D) is a benzophenone or a substituted benzophenone, an acetophenone or a substituted acetonphenone, benzoin or its alkyl ester, a xanthone or a substituted xanthone, diethoxy-acetophenone, an aminoketone, a benzildimethyl-ketal, and preferably is selected from the group consisting of 1-hydroxycyclohexyl-phenyl-ketone, 2-hydroxy-2-methylpropiophenone, 2-hydroxy-1-[4-(2-hydroxyethoxy)phenyl]-2-methyl-1-propanone, alpha-dimethoxy-alpha-phenylacetophenone, bis-acyl-phosphine oxide and mixtures thereof.

17. Substrate coated with a cured or an uncured composition according to any of claims 1 to 16.

18. Coating or film obtained from a cured composition according to any of claims 1 to 16.

19. Use of a composition according to any of claims 1 to 16 for the manufacturing of coatings for vehicles and building construction parts.
